(19) Europäisches Patentamt
European Patent Office
Office européen des brevets

(11) Publication number : **0 494 321 A1**

# EUROPEAN PATENT APPLICATION

(21) Application number : 90500127.7

(22) Date of filing : 24.12.90

(51) Int. Cl.⁵ : **F28F 21/06,** F28D 21/00, B29D 23/18

(30) Priority : **13.12.90 ES 9003187**

(43) Date of publication of application :
**15.07.92 Bulletin 92/29**

(84) Designated Contracting States :
**AT BE CH DE DK FR GB GR IT LI LU NL SE**

(71) Applicant : **POLIFLUOR S.L.**
**Barrio Molinao, Poligono Industrial 29**
**Pasajes Ancho (Guipuzcoa) (ES)**

(72) Inventor : **Segura Calahorra, Moises**
**Bo. Molinao, Pol. Industrial 29**
**Pasajes Ancho (ES)**
Inventor : **Llorens Llacuna, Juan**
**Bo. Molinao, Pol. Industrial 29**
**Pasajes Ancho (ES)**

(74) Representative : **Marques Alos, Fernando**
**Tuset, 34**
**E-08006 Barcelona (ES)**

(54) Combustion fume heat-exchange unit and manufacturing method.

(57)   This invention consists of a combustion fume heat-exchange unit made ur of a rectangular enclosure -1- with formal pyramidal side walls -2- containing a battery of PTFE bellow type tuves -4-, placed between two support plates -5- which delimit the fume chamber -6- to which incandescent gases have access through a hole located in its bottom side -7- and from this chamber, tempered gases come out through another hole located in its top side -8-, meanhile, air to be heated enters the heat-exchange unit via a hole located in one of the pyramidal side -9- passing through the fume chamber via bellow type tubes, and coming out, already hot, through a second hole located in the opposed pyramidal side -10-.

EP 0 494 321 A1

The purpose of this invention, at is defined in the title of this descriptive paper consits of a "COMBUSTION FUME HEAT-EXCHANGE UNIT AND MANUFACTURING METHOD".

As it is known, exchangers or heat-exchange units are devices designed to make the most, thermically speaking, of combustion fumes from boilers, stacks, etc... and they are specially adequate for the industry since they make it possible to obtain clean air at high temperatures to be used for heating, dryers, furnaces, boiler recharging, etc...

In short, this process consists of placing a series of tubes in the area where there is waste hot air escaping from a heat transformer, in such a way that the air comes in through one of the pipe ends, and passing through the area with incandescent waste fumes, it heats up by means of heat coming out from the tube walls.

Therefore at the same time, the heat gained by the clean air is lost by the combustion fumes, this way, coming out into the atmosphere at a considerable lower temperature and therefore, reducing environment pollution in the area.

However, most of these exchangers have several disadvantages:

– Its considerable dimensions due to intrinsically low heat transfer coefficient by gas convection.

– Exchangers performance decreases to a rapid deposit formation.

– In order to make the most of the fume heat, fume temperature in exchanger outlet should not be too high. As a consequence, in some parts of the exchangers, there are acid condensations forming from such as $SO_2$ which can be found in most combustions (coal, fuel-oil, gasoil, natural gas, etc....). These condensations are highly corrosive, therefore the installation deteriorates rapidly and in most cases installation life is no longer than two years.

In order to overcome these disadvantages, a neu heat-echange unit has been designed, built from PTFE tubes (polytetrafluorethylene),resistant to corrosion and which can bear, on continuous operation, a temperature of 260°C. On the other hand it does not age and it is considered the most nonadherent material known nowadays, and therefore there is no deposition or deposit formation on its surface.

The new heat-exchange unit is made up of a rectangular enclosure with pyramid shape side walls. The internal walls, pyramida! and flat, which may be in contact with fumes, are covered with a PTFE coat. Inside this enclosure, there is a battery consisting of bellow type PTFE tubes distributed quincunx wise on a line. This special geometry of the tubes results in a considerable higher ratio tube surface/tube lenght, for average tube diameter, than the one found with traditionally straight metal or glass tubes. Furthermore, this new geometry makes the tube less rigid and this, together with the PTFE nonadherent characteristic features, prevents deposit formation on the surface.

Inside the tubes, an spiral metal strip is introduced, giving this way a rotation movement to the clean air to be heated and forcing therefore a renovation of the air entrained on the peaks.

Finally, inside the enclosure, and underneath the tube battery there is a collecting tray for the deposited ashes which in those special cases of fumes with high concentrations of particles in suspension would be replaced by a collecting vessel.

In order to illustrate all the above mentioned, some drawings are attached to this paper, constituing an integral part of it, by way of a simplified and schematic example wich only illustrates but does not restrict the practical possibilities of the invention.

Drawing number one -1- represents the new heat-exchange unit, opened up, so that all internal components are visible.

Drawing number two -2- represents a detailed view of a tube whereby its fixing method can be appreciated.

Drawing number -3- is a diagram which illustrates the mechanization of the heat-exchange unit tubes.

Looking at this three drawings it can be appreciated that the new heat-exchange unit consists of a rectangular enclosure -1- with pyramidal walls -2-, equipped with a little door -3- which goves access to a battery made up of heat exchanging tubes -4-, distributed quincunx wise or on a line between two support plates -5-, which delimit the fumer chamber -6- where the heat exchange between incandescent fume and clean air takes place.

Incandescent gases enter this fume chamber through an inlet located on the bottom side -7- and come out through an inlet located on the bottom side -7- and come out through and outlet located on the top side -8-. These sides can be cone or truncopyramid shaped (depending on dimensions and required shapes).

Equally the aire to be heated comes in through an inlet located on the vertex of one of the pyramid-shaped sides -9- and passes through the heat exchanging tubes, coming out through a second outlet -10- located on the opposite pyramid-shaped side.

Inside the fume chamber, and below the tube battery, there is an ash collecting try -11-, which is in those special cases of fumes with high concentrations of particles in suspension would be replaced by a bigger capacity collecting vessel.

To construct the heat-exchanging tubes, a very thick PTFE tube is used, making it turn on its center line as well as shifting it in axial sense by means of pulsatory movements, so that every time it stops, two blades, one of them located outside -16- and the other one inside -17- the tube, cut it, respectively, external and internally all along the perimeter of the tube, and due to the parallel nature of these cuts, peaks are produced -18-, multiplying this way considerabley the heat-exchange surface for a given tube lenght.

Having completed above description, we must insist on the fact that details to realize the idea stated in this paper can vary, in other words, there can be minor modifications, always based on the fundamental principles of the idea, which are essentially those already presented in previous paragraphs.

As a matter of fact, the existing Law of Patents identifies as non suceptible to be patented, the changes in shape, dimensions, proportions and materials of an object already patented, establishing therefore a legislator's criteria in as much as a patented idea which can result in a practical and susceptible to be industrialized reality will not be anybody's excuse to, taking it as base, and alleging slight modifications, present it as new and his/her own.

Once the stated concept has been established, with regards to what should cover the requested protection, it follows a Claims Note which summarizes the nex developments which are to be claimed.

## NOTE

Briefly, the privilage of the exclusive commercial use required comes back to the following claims:

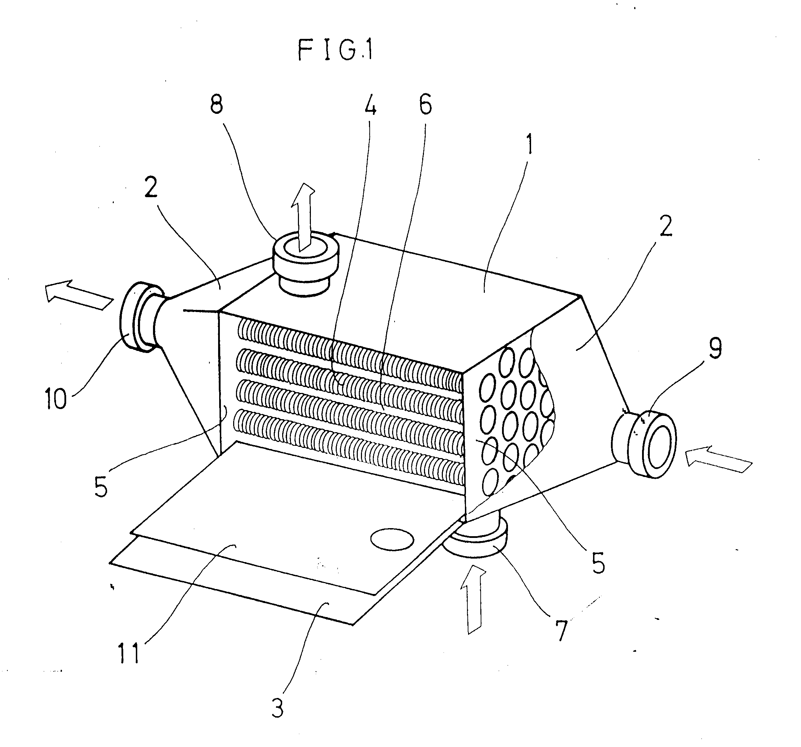

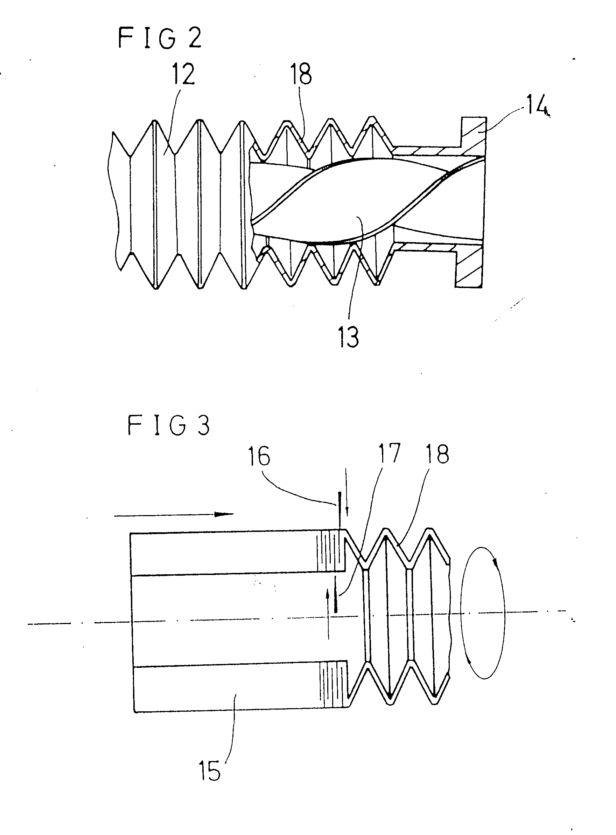

## Claims

**1st.-** "COMBUSTION FUME HEAT-EXCHANGE UNIT AND CONSTRUCTION METHOD". Its basic characteristics are as follows: it consists of a rectangular enclosure with pyramidal side walls, internally coated with PTFE sheets and contaning a battery made up of PTFE bellow type tubes, distributed quincunx wise or on a line between two support plates which also delimit the fume chamber which is equipped with an incandescent fume inlet on its bottom side and a cold fume outlet on its top side.

**2nd. -** Combustion fume heat-exchange unit and construction method, as per above claimed with an esential feature: on the vertex of one of the pyramid-shaped sides, there is a cold air inlet whereby the cold air passes through the PTFE tubes in the fume chamber, comes out the heat-exchange unit via a hot air outlet, located on the vertex of the opposite pyramid-shaped side.

**3rd. -** Combustion fume heat-exchange unit and construction method, distinguished by an ash collecting tray located underneath the PTFE tubes pf the battery to which a little door located in the rectangular enclosure gives access.

**4th. -** Combustion fume heat-exchange unit and construction method, esentially distinguished by PTFE tubes with a vider diameter at ist ends so that they can be secured to the corresponding supports, and also distinguished by an spiral metal strip located inside the tube.

**5th. -** Combustion fume heat-exchange unit and construction method, esentially distinguished by the fact that a very thick PTFE tube is used, making it turn on its center line as well as shifting it in axial sense by means of pulsatory movements so taht every time it stops, two parallel blades, one of them located outside and the other one inside the tube, cut it, respectively, external and internally all along the perimeter of the tube, alternating this way internal and external cuts which converts the straigh original tube into a belloww type tube, also fitting at the same time the spiral metal strip inside the tube.

I should all be as it is stated in this descriptive paper which consists of ten pages, duly numberes, each typed only on the one side, being sixth and seventh page, drawings.

FIG.1

# F I G 2

12    18    14

13

# F I G 3

16    17    18

15

EP 0 494 321 A1

European Patent Office

**EUROPEAN SEARCH REPORT**

Application Number

EP 90 50 0127

## DOCUMENTS CONSIDERED TO BE RELEVANT

| Category | Citation of document with indication, where appropriate, of relevant passages | Relevant to claim | CLASSIFICATION OF THE APPLICATION (Int. Cl.5 ) |
|---|---|---|---|
| Y | DE-A-3 102 723 (AIR FROLICH AG)<br>* page 3, line 25 - page 4, line 8 *<br>* page 7, line 3 - page 7, line 28 *<br>* figures 1-5 * | 1 | F28F21/06<br>F28D21/00<br>B29D23/18 |
| A | | 2 | |
| Y | US-A-4 538 678 (FUKUMOTO)<br>* column 7, line 40 - column 7, line 57; figure 15 * | 1,3-5 | |
| Y | FR-A-2 501 832 (PERCEVAUT)<br>* page 4, line 1 - page 4, line 5 *<br>* page 5, line 16 - page 5, line 18 *<br>* figure 1 * | 3 | |
| Y | GB-A-2 087 064 (EASTWOOD)<br>* page 1, line 82 - page 1, line 125; figure 1 * | 4 | |
| A | | 2 | |
| Y | US-A-2 304 828 (JOY)<br>* page 1, right column, line 36 - page 2, left column, line 48; figures 6-9 * | 5 | TECHNICAL FIELDS SEARCHED (Int. Cl.5 ) |
| A | | 4 | F28F<br>F28D<br>B29D<br>F23L |
| A | FR-A-2 592 812 (SOBEA)<br>* page 4, line 4 - page 4, line 22; figure 1 * | 1,2 | |
| A | US-A-4 078 602 (RICHER)<br>* column 2, line 32 - column 3, line 2 *<br>* column 3, line 21 - column 3, line 40; figures 1-3 * | 1-3 | |
| A | FR-A-1 594 597 (COUGNET)<br>* page 2, line 14 - page 2, line 17; figure 1 * | 1 | |

The present search report has been drawn up for all claims

| Place of search | Date of completion of the search | Examiner |
|---|---|---|
| THE HAGUE | 21 MARCH 1991 | BELTZUNG |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P0401)

6